# EUROPEAN PATENT APPLICATION

(11) **EP 4 700 537 A1**
(43) Date of publication of application: **25.02.2026**
(21) Application number: 25733842.6
(22) Date of filing: 01.07.2025
(51) Int. Cl.: G06F 1/16, H04N 23/51, H05K 5/02

(54) **ELECTRONIC DEVICE COMPRISING CAMERA AND CAMERA PROTECTION MEMBER**

(30) Priority: 04.07.2024 KR 20240088383; 26.11.2024 KR 20240171386
(71) Applicant: Samsung Electronics Co., Ltd, Suwon-si, Gyeonggi-do 16677 (KR)
(72) Inventor: KIM, Sungjung, Suwon-si Gyeonggi-do 16677 (KR)
(74) Representative: Walaski, Jan Filip
(86) International application number: PCT/KR2025/009320
(87) International publication number: WO 2026/010318

(57) **Abstract**

An electronic device may comprise a housing forming at least a portion of an outer surface of the electronic device and including a rear plate, a display disposed opposite to the rear plate on the housing, a camera disposed in the housing and aligned with an opening formed in the rear plate, a camera window disposed to cover the camera, a lower bracket at least partially disposed on an inner surface of the rear plate to protrude through the opening formed in the rear plate, a middle bracket disposed on the lower bracket and configured to support the camera window, an upper bracket disposed on the middle bracket, a first waterproofing member disposed between the middle bracket and the lower bracket to provide a first waterproof seal between the middle bracket and the lower bracket, and a second waterproofing member disposed between the middle bracket and the camera window to provide a second waterproof seal between the middle bracket and the camera window. Other various embodiments are possible.

## Description

### [Technical Field]

The disclosure relates to an electronic device, e.g., an electronic device including a camera and a camera protective member.

### [Background Art]

The term "electronic device" may mean a device performing a particular function according to its equipped program, such as a home appliance, an electronic scheduler, a portable multimedia player, a mobile communication terminal, a tablet PC, a video/sound device, a desktop PC or laptop computer, a navigation for automobile, etc. For example, the electronic devices may output stored information as voices or images. As electronic devices are highly integrated, and high-speed, high-volume wireless communication becomes commonplace, an electronic device, such as a mobile communication terminal, is being equipped with various functions. For example, an electronic device comes with the integrated functionality, including an entertainment function, such as playing video games, a multimedia function, such as replaying music/videos, a communication and security function for mobile banking, and a scheduling and e-wallet function.

As smartphones or other personal/portable communication devices spread, users' demand for portability and user convenience is on the rise. For example, a touchscreen display may not only serve as an output device of visual information but also provide a virtual keyboard that replaces a mechanical input device (e.g., a button input device). As such, portable communication devices or electronic devices may be made compact while delivering further enhanced applicability (e.g., a larger screen). Flexible displays, e.g., foldable or rollable displays, will come in commerce and electronic devices are expected to deliver better portability and use convenience. An electronic device including a flexible display may be carried in a folded or rolled state of a plurality of different structures (e.g., housings), and may provide a large screen in an unfolded state, thereby enhancing portability and ease of use.

The above-described information may be provided as related art for the purpose of helping understanding of the disclosure. No claim or determination is made as to whether any of the foregoing is applicable as background art in relation to the disclosure.

### [Disclosure of Invention]

### [Solution to Problems]

According to an embodiment of the disclosure, an electronic device may comprise a housing forming at least a portion of an outer surface of the electronic device and including a rear plate, a display disposed opposite to the rear plate on the housing, a camera disposed in the housing and aligned with an opening formed in the rear plate, a camera window disposed to cover the camera, a lower bracket at least partially disposed on an inner surface of the rear plate to protrude through the opening formed in the rear plate, a middle bracket disposed on the lower bracket and configured to support the camera window, an upper bracket disposed on the middle bracket, a first waterproofing member disposed between the middle bracket and the lower bracket to provide a first waterproof seal between the middle bracket and the lower bracket, and a second waterproofing member disposed between the middle bracket and the camera window to provide a second waterproof seal between the middle bracket and the camera window.

According to an embodiment of the disclosure, an electronic device may comprise a housing forming at least a portion of an outer surface of the electronic device and including a rear plate, a display disposed opposite to the rear plate on the housing, a camera disposed in the housing and aligned with an opening formed in the rear plate, a camera window disposed to cover the camera, a lower bracket fixed to an inner surface of the rear plate, surrounding the camera, partially disposed in the opening of the rear plate, and protruding with respect to an outer surface of the rear plate, an upper bracket disposed outside the lower bracket, a middle bracket at least partially disposed between the lower bracket and the upper bracket and configured to have the camera window and the upper bracket fixed to a first surface 441 of the middle bracket, a first waterproofing member including a waterproofing material and disposed between the first surface of the middle bracket, a second surface, different from the first surface, of the middle bracket, and the lower bracket, and a second waterproofing member including a waterproofing material and disposed between the first surface of the middle bracket and the camera window.

According to an embodiment of the disclosure, an electronic device may comprise a housing forming at least portion of an outer surface of the electronic device and including a first housing and a second housing rotatably connected to the first housing and including a rear plate, a flexible display including a first display area disposed on the first housing, a second display area disposed on the second housing and facing opposite to the rear plate, and a folding area connected to the first display area and the second display area and configured to be at least partially folded or unfolded, and a camera disposed in the second housing and aligned with an opening formed in the rear plate, a camera window disposed to cover the camera, a lower bracket fixed to an inner surface of the rear plate, surrounding the camera, partially disposed in the opening of the rear plate, and protruding with respect to an outer surface of the rear plate, an upper bracket disposed outside the lower bracket, a middle bracket at least partially disposed between the lower bracket and the upper bracket and configured to have the camera window and the upper bracket fixed to a first surface 441 of the middle bracket, and a waterproofing member including a waterproofing material, and disposed between a second surface of the middle bracket and the lower bracket to waterproof a space between the second surface of the middle bracket and the lower bracket regardless of a state of the upper bracket being fixed to the middle bracket or being separated from the middle bracket by an external impact applied to the electronic device.

### [Brief Description of Drawings]

FIG. 1 is a block diagram illustrating an electronic device in a network environment;
FIG. 2 is a view illustrating an unfolded state of an electronic device;
FIG. 3 is a view illustrating a folded state of an electronic device;
FIG. 4 is an exploded perspective view illustrating an electronic device;
FIG. 5 is an exploded perspective view illustrating a protective member, a camera assembly, and a rear plate;
FIG. 6 is an exploded perspective view illustrating a protective member and a rear plate;
FIG. 7 is a perspective cross-sectional view of an electronic device taken along line A-A' of FIG. 2;
FIG. 8 is an enlarged, cross-sectional view illustrating portion B of FIG. 7;
FIG. 9 is a cross-sectional view illustrating a protective member;
FIG. 10 is a cross-sectional view illustrating a protective member;
FIG. 11 is a cross-sectional view illustrating a protective member;
FIG. 12 is a cross-sectional view illustrating a protective member; and
FIG. 13 is a cross-sectional view illustrating a protective member.

### [Mode for the Invention]

Hereinafter, embodiments are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

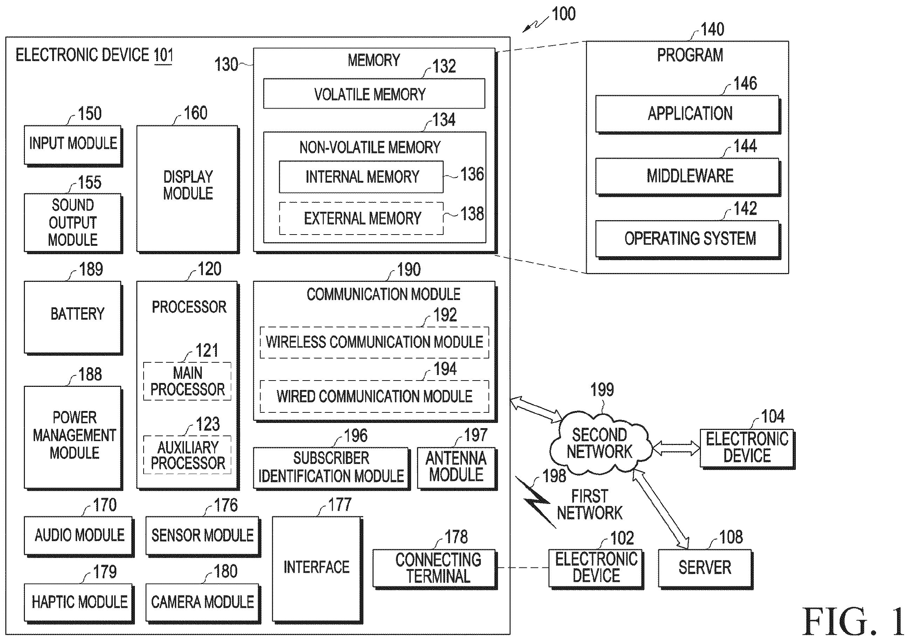

FIG. 1 is a block diagram illustrating an electronic device 101 in a network environment 100 according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

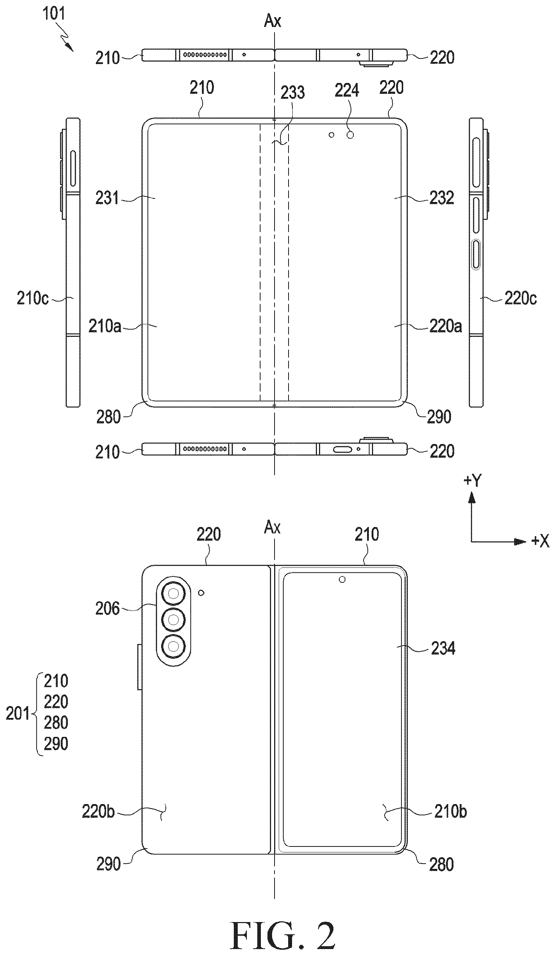

FIG. 2 is a view illustrating an unfolded state of an electronic device.

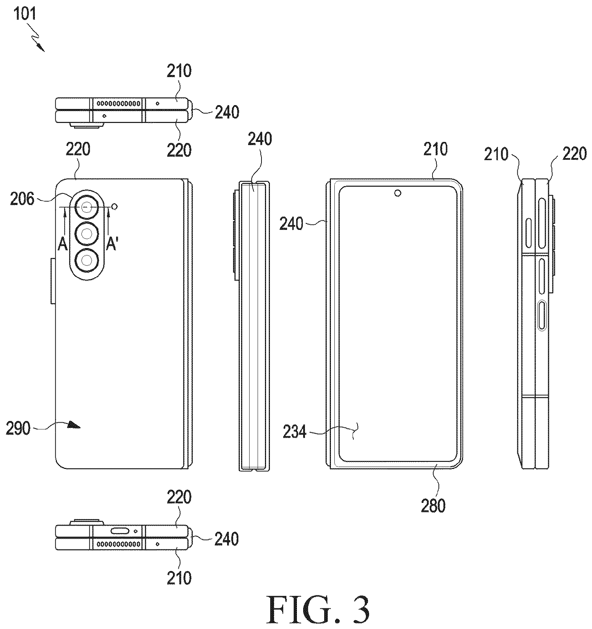

FIG. 3 is a view illustrating a folded state of an electronic device.

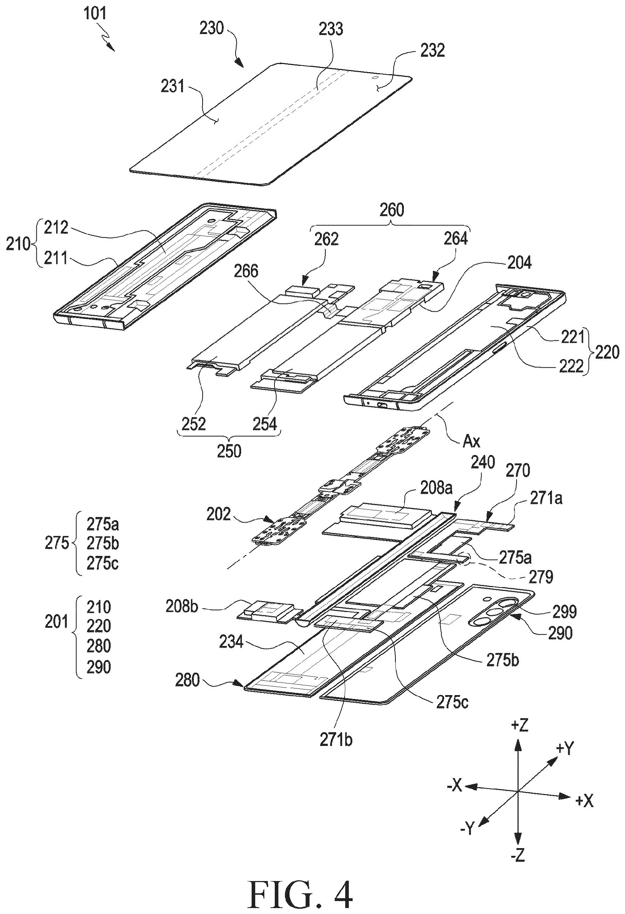

The embodiments of FIGS. 2 and 3 may be combined with the embodiment of FIG. 1 or the embodiments of FIGS. 4 to 13.

Referring to FIGS. 2 and 3, an electronic device 101 (e.g., the electronic device 101 of FIG. 1) may include a housing 201, a hinge cover 240 covering a foldable portion of the housing 201, and a display 230 (e.g., the display module 160 of FIG. 1) disposed in a space formed by the housing 201.

The surface where the screen output from the display 230 is exposed may be defined as a front surface (e.g., the first front surface 210a and the second front surface 220a) of the electronic device 101. A surface opposite to the front surface may be defined as a rear surface (e.g., the first rear surface 210b and the second rear surface 220b) of the electronic device 101. A surface surrounding the space between the front surface and the rear surface may be defined as a side surface (e.g., the first side surface 210c and the second side surface 220c) of the electronic device 101. The side surface of the electronic device 101 may be a side surface of at least one of the first housing 210 or the second housing 220. The electronic device 101 of FIGS. 2 and 3 may be referred to as a foldable electronic device, a portable electronic device, or a portable foldable electronic device. The housing 201 may be referred to as a foldable housing. The display 230 may be referred to as a "flexible display."

The housing 201 may form at least a portion of the exterior of the electronic device 101. The housing 201 may include a first housing 210, a second housing 220 rotatable with respect to the first housing 210, a first rear cover 280, and a second rear cover 290. The housing 201 of the electronic device 101 is not limited to the shape and coupling shown in FIGS. 2 and 3 but may rather be implemented in other shapes or via a combination and/or coupling of other components. For example, the first housing 210 and the first rear cover 280 may be integrally formed with each other, and the second housing 220 and the second rear cover 290 may be integrally formed with each other. The first rear cover 280 may be defined and/or referred to as a first rear plate 280. The second rear cover 290 may be defined and/or referred to as a second rear plate 290.

The first housing 210 may be connected to a hinge structure (e.g., the hinge structure 202 of FIG. 4) and may include a first front surface 210a facing in a first direction and a first rear surface 210b facing in a second direction opposite to the first direction. The second housing 220 may be connected to the hinge structure and may include a second front surface 220a facing in a third direction and a second rear surface 220b facing in a fourth direction opposite to the third direction, and may rotate from the first housing 210 about the hinge structure. Accordingly, the electronic device 101 may be changed to a folded state or an unfolded state. The folding or unfolding operation of the electronic device 101 may be understood as the rotation of the first housing 210 about the hinge structure or the rotation of the second housing 220 about the hinge structure. In the folded state of the electronic device 101, the first front surface 210a may face the second front surface 220a. In the unfolded state of the electronic device 101, the third direction may be the same as the first direction. Hereinafter, unless otherwise mentioned, directions are described based on the unfolded state of the electronic device 101.

The first housing 210 and the second housing 220 are disposed on both sides of the folding axis Ax and are overall symmetrical in shape with respect to the folding axis Ax. As set forth below, the first housing 210 and the second housing 220 may have different angles or distances formed therebetween depending on whether the electronic device 101 is in the unfolded, folded, or intermediate state. The second housing 220 further includes the sensor area 224 where sensors (e.g., front camera) are disposed but, in the remaining area, the second housing 220 may be symmetrical in shape with the first housing 210.

There may be provided a plurality of (e.g., two) folding axes Ax parallel to each other. In the disclosure, the folding axis Ax is provided along the length direction (Y-axis direction) of the electronic device 101, but the direction of the folding axis Ax is not limited thereto. For example (not shown), an embodiment in which the electronic device 101 includes the folding axis extending along the width direction (e.g., X-axis direction) may be implemented.

The electronic device 101 may include a structure to which a digital pen (not shown) may be attached. For example, the electronic device 101 may include a magnetic substance configured to attach the digital pen to a side surface of the first housing 210 or a side surface of the second housing 220. The electronic device 101 may include a structure into which a digital pen may be inserted. For example, a hole (not shown) into which the digital pen may be inserted may be formed in a side surface of the first housing 210 or a side surface of the second housing 220 of the electronic device 101.

The first housing 210 and the second housing 220 may at least partially be formed of a metal or non-metallic material with a rigidity selected to support the display 230. At least a portion formed of metal may provide a ground plane of the electronic device 101 and may be electrically connected with a ground line formed on a printed circuit board (e.g., the circuit board 260 of FIG. 4).

The sensor area 224 may be formed adjacent to an edge or corner of the second housing 220 and to have a predetermined area. However, the placement, shape, or size of the sensor area 224 is not limited to those illustrated. The sensor area 224 may be provided in a different corner of the second housing 220 or in any area between the top corner and the bottom corner or in the first housing 210. Components for performing various functions, embedded in the electronic device 101, may be exposed through the sensor area 224 or one or more openings in the sensor area 224 to the front surface of the electronic device 101. The components may include various kinds of sensors. The sensor(s) may include, e.g., at least one of a front camera, a receiver, or a proximity sensor.

The first rear cover 280 may be disposed on one side of the folding axis Ax on the rear surface of the electronic device 101 and have, e.g., a substantially rectangular periphery which may be surrounded by another structure of the first housing 210. Similarly, the second rear cover 290 may be disposed on the opposite side of the folding axis Ax on the rear surface of the electronic device 101 and its periphery may be surrounded by another structure of the second housing 220.

The first rear cover 280 and/or the second rear cover 290 may be substantially symmetrical in shape with respect to the folding axis (axis Ax). However, the first rear cover 280 and the second rear cover 290 are not necessarily symmetrical in shape. The electronic device 101 may include the first rear cover 280 and the second rear cover 290 in different shapes, not symmetrical.

The first rear cover 280, the second rear cover 290, the first housing 210, and the second housing 220 may provide a space where various components (e.g., a printed circuit board or battery) of the electronic device 101 may be disposed. One or more components may be disposed or visually exposed on the rear surface of the electronic device 101. For example, at least a portion of a sub display 234 may be visually exposed through at least a portion of the first rear cover 280. One or more components or sensors may be visually exposed through at least a portion of the first rear cover 290. The sensor may include a proximity sensor and/or a camera module 206 (e.g., rear camera).

A front camera exposed to the front surface of the electronic device 101 through one or more openings provided in the sensor area 224 or the camera module 206 (e.g., the rear camera) exposed through at least a portion of the second rear cover 290 may include one or more lenses, an image sensor, and/or an image signal processor. Two or more lenses (an infrared (IR) camera, a wide-angle lens, and a telephoto lens) and image sensors may be disposed on one surface of the electronic device 101.

The camera module 206 exposed through at least a portion of the second rear cover 290 may face opposite to the second display area 232 of the display 230.

The hinge cover 240 may be disposed between the first housing 210 and the second housing 220 to hide the internal components (e.g., the hinge structure 202 of FIG. 4). The hinge cover 240 may be hidden by a portion of the first housing 210 and second housing 220 or be exposed to the outside depending on the state (e.g., the unfolded state (e.g., flat state) or folded state) of the electronic device 101.

As shown in FIG. 2, in the unfolded state of the electronic device 101, the hinge cover 240 may be hidden, and thus not exposed, by the first housing 210 and the second housing 220. As shown in FIG. 3, in the folded state (e.g., a fully folded state) of the electronic device 101, the hinge cover 240 may be exposed to the outside between the first housing 210 and the second housing 220. In an intermediate state in which the first housing 210 and the second housing 220 are folded with a certain angle, the hinge cover 240 may be partially exposed to the outside between the first housing 210 and the second housing 220. However, in this case, the exposed area may be smaller than that in the completely folded state. The hinge cover 240 may include a curved surface.

The display 230 may be disposed in a space formed (or defined) by the housing 201. For example, the display 230 may be seated on a recess provided by the housing 201 and may form most of the front surface of the electronic device 101. Thus, the front surface of the electronic device 101 may include the display 230 and a partial area of the first housing 210 and a partial area of the second housing 220, which are adjacent to the display 230. The rear surface of the electronic device 101 may include a first rear cover 280, a partial area of the first housing 210 adjacent to the first rear cover 280, a second rear cover 290, and a partial area of the second housing 220 adjacent to the second rear cover 290.

The display 230 may include a plurality of display areas spaced apart from each other. For example, the display 230 may include a first display area 231 disposed on the first housing 210, a second display area 232 disposed on the second housing 220, and a folding area 233. The first display area 231 and the second display area 232 may rotate about the folding axis Ax.

The display 230 may mean a display at least a portion of which may be transformed into a flat or curved surface. For example, the display 230 may be a foldable or flexible display. The display 230 may include a folding area 233, a first display area 231 disposed on one side of the folding area 233 (e.g., the left side of the folding area 233 of FIG. 2), and a second display area 232 disposed on the opposite side of the folding area 233 (e.g., the right side of the folding area 203 of FIG. 2). However, the segmentation of the display 230 is merely an example, and the display 230 may be divided into a plurality of (e.g., four or more, or two) areas depending on the structure or function of the display 200. For example, in the embodiment illustrated in FIG. 2, the area of the display 230 may be divided by the folding area 233 or folding axis (axis Ax) extending parallel to the Y-axis. The display 230 may be divided into areas based on another folding area (e.g., a folding area parallel to the X-axis) or another folding axis (e.g., a folding axis parallel to the X-axis). The display 230 may be coupled with or disposed adjacent to a touch detection circuit, a pressure sensor capable of measuring the strength (pressure) of touches, and/or a digitizer (not shown) for detecting a magnetic field-type stylus pen.

The first display area 231 and the second display area 232 may be overall symmetrical in shape with respect to the folding area 233. According to an embodiment (not shown), unlike the first display area 231, the second display area 232 may include a notch depending on the presence of the sensor area 224, but the rest may be substantially symmetrical in shape with the first display area 231. For example, the first display area 231 and the second display area 232 may include symmetrical portions and asymmetrical portions.

Described below are the operation of the first housing 210 and the second housing 220 and each area of the display 230 depending on the state (e.g., the unfolded state (or flat state) and folded state) of the electronic device 101.

When the electronic device 101 is in the unfolded state (flat state) (e.g., FIG. 2), the first housing 210 and the second housing 220 may be disposed to face in the same direction while being angled substantially at 180 degrees therebetween. The surface of the first display area 231 and the surface of the second display area 232 of the display 230 may be angled at 180 degrees therebetween while facing in the same direction (e.g., forward of the front surface of the electronic device). The folding area 233 may form the same plane with the first display area 231 and the second display area 232.

When the electronic device 101 is in the folded state (e.g., FIG. 3), the first housing 210 and the second housing 220 may be disposed to face each other. The surface of the first display area 231 and the surface of the second display area 232 of the display 230 may be angled at a small angle (e.g., an angle between about 0 degrees and about 10 degrees) therefrom while facing each other. In the folded state of the electronic device 101, at least a portion of the folding area 233 may be formed as a curved surface having a predetermined curvature.

When the electronic device 101 is in the intermediate state (not shown), the first housing 210 and the second housing 220 may be disposed at a certain angle therebetween. The surface of the first display area 231 of the display 230 and the surface of the second display area 232 may form an angle which is larger than the angle in the folded state and smaller than the angle in the unfolded state. The folding area 233 may at least partially have a curved surface with a predetermined curvature and, in this case, the curvature may be smaller than that when it is in the folded state.

FIG. 4 is an exploded perspective view illustrating an electronic device;

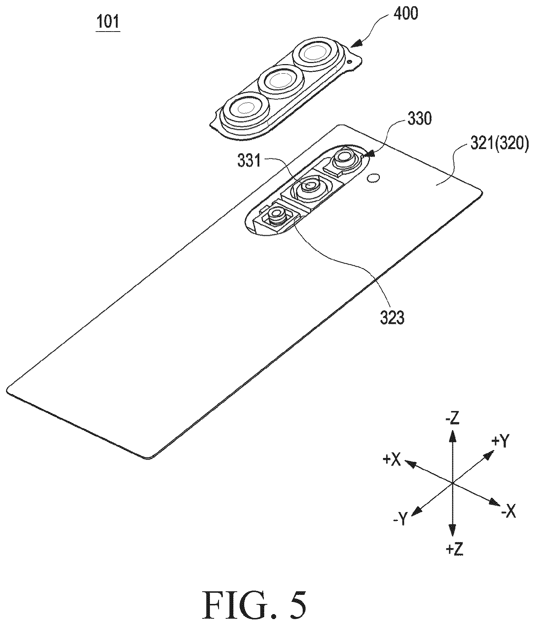

The embodiment of FIG. 4 may be combined with the embodiments of FIGS. 1 to 3, or the embodiments of FIGS. 5 to 13.

The configurations of the embodiments of FIG. 4 may be identical in whole or part to the configurations of the embodiments of FIGS. 1 to 3, or the configurations of the embodiments of FIGS. 5 to 13.

Referring to FIG. 4, an electronic device 101 (e.g., the electronic device 101 of FIGS. 2 to 3) may include a housing 201, a display 230, a hinge assembly 202, a battery 250, and a circuit board 260. For example, the housing 201 may include a first housing 210, a second housing 220, a first rear cover 280, and a second rear cover 290. The housing 201 may be understood as including a hinge cover 240. The configuration of the first housing 210, the second housing 220, the hinge cover 240, the first rear cover 280, and the second rear cover 290 of FIG. 4 may be identical in whole or part to the configuration of the first housing 210, the second housing 220, the hinge cover 240, the first rear cover 280, and the second rear cover 290 of FIG. 2 and/or FIG. 3.

The first housing 210 and the second housing 220 may be assembled together to be coupled to two opposite sides of the hinge structure 202. For example, the hinge structure 202 may be disposed in a hinge area between the first housing 210 and the second housing 220 to rotatably couple the first housing 210 and the second housing 220. Here, the 'hinge area' may refer to a space where the hinge structure 202 is disposed, an area at least partially surrounded by the hinge cover 240, and/or a space between the hinge cover 240 and the folding area 233 of the display 230. The hinge area may be understood as a space disposed substantially corresponding to the folding area 233.

The hinge structure 202 may connect the first housing 210 and the second housing 220 to be rotatable relative to each other. The hinge structure 202 may be covered by the hinge cover 240. The electronic device 101 may include a hinge assembly including the hinge structure 202 and the hinge cover 240.

The hinge structure 202 may provide a folding axis Ax (e.g., the folding axis Ax of FIG. 2). The hinge structure 202 may be connected to the first plate 212 (e.g., a first bracket) of the first housing 210 and the second plate 222 (e.g., a second bracket) of the second housing 220. The housings 210 and 220 may be coupled to the hinge structure 202 to may rotate about the hinge structure 202 or the hinge cover 240.

The first housing 210 may include a first plate 212 (e.g., a first support member or first supporting area) that may support the components (e.g., the first circuit board 262 and/or the first battery 252) of the electronic device 101 and a first side wall 211 surrounding at least a portion of the first plate 212. The first side wall 211 may include a first side surface (e.g., the first side surface 210c of FIG. 2) of the electronic device 101. The second housing 220 may include a second plate 222 (e.g., a second support member or second supporting area) that may support the components (e.g., the second circuit board 264 and/or the second battery 254) of the electronic device 101 and a second side wall 221 surrounding at least a portion of the second plate 222. The second side wall 221 may include a second side surface (e.g., the second side surface 220c of FIG. 2) of the electronic device 101.

The first side wall 211 or the second side wall 221 may be understood as a frame shape that at least partially surrounds a space between the front surface and the rear surface of the electronic device 101(e.g., the first housing 210 or the second housing 220). The plates 212 and 222 may be structures extending from one of the side walls 211 and 221. For example, for convenience of description, the plates 212 and 222 and the side walls 211 and 221 are described separately, but they are not limited thereto, and the plates 212 or 222 and the side walls 211 or 221 may be implemented as a single body. The plates 212 or 222 and the side walls 211 or 221 may be implemented by combining an insulating material and an electrically conductive material, and in this case, the housings 210 and 220 may be implemented by integrally forming the plates 212 or 222 and the side walls 211 or 221 through an insert injection-molding process and/or a computer numerical control machining process.

A portion of at least one of the housings 210 and 220 may function as an antenna. For example, the portion of the electronic device 101 which functions as an antenna may implement at least a portion of a side surface of at least one of the housings 210 and 220.

The portion of the electronic device 101 which functions as an antenna may be disposed to be adjacent to a side surface of at least one of the housings 210 and 220 and/or to face a direction (e.g., X-axis direction or Y-axis direction) crossing the Z-axis. For example, the portion of the electronic device 101 which functions as an antenna may be implemented by portions of the housings 210 and 220, or may be disposed adjacent to edges of the housings 210 and 220 while being manufactured in the form of a component separate from the housings 210 and 220. The phrase "the portion of the electronic device 101 that functions as an antenna is implemented by portions of the housings 210 and 220" may be understood as including, e.g., an example in which the portion functioning as an antenna is disposed to form a side surface of at least one of the housings 210 and 220.

Although not shown, the first housing 210 may include a first waterproofing member disposed on the first plate 212 and/or the second housing 220 may include a second waterproofing member disposed on the second plate 222. The first waterproofing member and/or the second waterproofing member may be disposed in the gaps between the display 230 and the plates 212 and 222 to suppress influx of moisture or foreign bodies from the outside to the inside of the first housing 210 and/or the second housing 220.

The display 230 (e.g., a flexible display or a foldable display) may include a first display area 231, a second display area 232, and/or a folding area 233. The configuration of the first display area 231, the second display area 232, and the folding area 233 of FIG. 4 may be identical in whole or part to the configuration of the first display area 231, the second display area 232, and the folding area 233 of FIG. 2.

The electronic device 101 may further include a sub display 234. The sub display 234 may display screen in a different direction from the display areas 231 and 232. For example, the sub display 234 may output screen in a direction opposite to the first display area 231. The sub display 234 may be disposed on the first rear cover 280. For example, the sub display 234 may be disposed between the first rear cover 280 and the first plate 212.

The electronic device 101 may include a camera assembly 204 (e.g., the camera module 206 of FIG. 2 or 3) in which a plurality of cameras are combined. Although not shown, the electronic device 101 may further include a camera for capturing a subject through a portion (e.g., the first display area 231 or the second display area 232) of the display 230 or a camera for capturing a subject through a portion of the sub display 234.

The electronic device 101 and/or the second rear cover 290 may include a cover plate 299 disposed corresponding to the camera assembly 204. The cover plate 299 may provide an optical path (e.g., a through hole) corresponding to the camera assembly 204, to be harmonized with the outer appearance of the electronic device 101. To provide an aesthetic appeal to the appearance of the electronic device 101 or to achieve a harmonious appearance, the cover plate 299 may include a metal material. For example, the cover plate 299 may be formed of a metal material, or may be finished (e.g., printed, deposited, coated or plated) with a metal material. The cover plate 299 may be understood as a portion of the second rear cover 290, and a portion (e.g., edge) thereof may be disposed in the second rear cover 290, and another portion may be disposed while being exposed to the outside.

A camera assembly 204 including a plurality of cameras may be defined and/or referred to as a rear camera assembly 204 exposed through the rear surface of the electronic device 101 or the rear surface of the second housing 220. The camera assembly 204 may be protected from external impact by being covered by the cover plate 299. The cover plate 299 may be defined and/or referred to as a protective member or a camera decorative member.

The camera assembly 204 may face opposite to the second display area 232 of the flexible display 230.

The battery 250 may include a first battery 252 disposed in the first housing 210 and a second battery 254 disposed in the second housing 220. The first battery 252 may be connected with the first circuit board 262, and the second battery 254 may be connected to the second circuit board 264. The battery 250 may supply power to at least one component of the electronic device 101. The battery 250 may include, for example, a primary cell which is not rechargeable, a secondary cell which is rechargeable, or a fuel cell.

The circuit board 260 may include a first circuit board 262 disposed in the first housing 210 and a second circuit board 264 disposed in the second housing 220. The first circuit board 262 and the second circuit board 264 may be electrically connected by at least one flexible printed circuit board 266. At least a portion of the flexible printed circuit board 266 may be disposed across the hinge area or hinge structure (e.g., the hinge structure 202). The first circuit board 262 and the second circuit board 264 may be disposed in a space formed by the first housing 210, the second housing 220, the first rear cover 280, and the second rear cover 290. Components for implementing various functions of the electronic device 101 may be disposed on the first circuit board 262 and the second circuit board 264.

The electronic device 101 may include speakers 208a and 208b. The speakers 208a and 208b may convert the electric signal into sound. The speakers 208 and 208b may be disposed in a space formed by the first housing 210, the second housing 220, the first rear cover 280, and the second rear cover 290. The speakers 208a and 208b may include an upper speaker 208a positioned in an upper portion (+Y direction) of the electronic device 101 and a lower speaker 208b positioned in a lower portion (-Y direction) of the electronic device 101. In the disclosure, the speakers 208a and 208b are illustrated as positioned in one housing (e.g., the first housing 210 of FIG. 40, but this is an optional structure. For example, the speakers 208a and 208b may be positioned in at least one of the first housing 210 or the second housing 220. The configuration of the speakers 208a and 208b of FIG. 4 may be identical in whole or part to the configuration of the sound output module 155 of FIG. 1.

The electronic device 101 may include a rear member 270 (or rear case). The rear member 270 may be disposed in the housing 201 (e.g., the second housing 220). The rear member 270 may accommodate at least one antenna 275. The rear member 270 may function as a structure for disposing the antenna 275 and may function as a structure for supporting or protecting one of the circuit boards 262 and 264. For example, a portion of rear member 270 denoted by reference number '279' may support a portion of circuit boards 262 and 264.

The electronic device 101 may include an antenna 275. The antennas 275a and 275b may include, e.g., an ultra-wide band (UWB) antenna 275a, a near-field communication (NFC) antenna, a wireless charging antenna, and/or a magnetic secure transmission (MST) antenna 275b. The antenna 275 may perform short-range communication with, e.g., an external device or may wirelessly transmit or receive power necessary for charging.

An antenna structure may be formed by a portion of the housing 201 or a combination thereof. For example, the antenna 275 may include a communication antenna 275c. The communication antenna 275c may be used for communication (e.g., Wi-Fi) with an external electronic device. For example, the communication antenna 275c may be positioned on the upper portion 271a or the lower portion 271b of the rear member 270. Further, the electronic device 101 may further include an additional antenna disposed adjacent to a portion of the side walls 211 and 221 or an electronic component such as the camera assembly 204.

The first plate 212 may be disposed between the first display area 231 and the first rear cover 280. The first display area 231 may be disposed on one surface of the first plate 212 (e.g., the surface facing the +Z direction of FIG. 4). The first rear cover 280 may be disposed below the other surface of the first plate 212 (e.g., the surface facing the -Z direction of FIG. 4).

The first battery 252 and the first circuit board 262 may be disposed on the other surface (a surface facing the -Z direction of FIG. 4) of the first plate 212. For example, the first battery 252 and the first circuit board 262 may be disposed between the first plate 212 and the first rear cover 280. The first plate 212 may be disposed between the first display area 231 and the first battery 252. The first plate 212 may be disposed between the first display area 231 and the first circuit board 262.

The second plate 222 may be disposed between the second display area 232 and the second rear cover 290. The second display area 232 may be disposed on one surface of the second plate 222 (e.g., the surface facing the +Z direction of FIG. 4). The second rear cover 290 may be disposed below the other surface of the second plate 222 (e.g., the surface facing the -Z direction of FIG. 4).

The second battery 254 and the second circuit board 264 may be disposed on the other surface of the second plate 222 (e.g., the surface facing the -Z direction of FIG. 4). For example, the second battery 254 and the second circuit board 264 may be disposed between the second plate 222 and the second rear cover 290. The second plate 222 may be disposed between the second display area 232 and the second battery 254. The second plate 222 may be disposed between the second display area 232 and the second circuit board 264.

Hereinafter, the rear camera and the protective member protecting the rear camera are described with reference to FIGS. 5 to 13. The rear camera and protective member described using FIGS. 5 to 13 as an example are applied to a foldable electronic device including housings that are rotatable about each other and a flexible display that is at least partially foldable or unfoldable, but the disclosure is not limited thereto. For example, the rear camera and protective member described using FIGS. 5 to 13 as an example may also be applied to bar-type electronic devices with rigid front displays (e.g., non-foldable front displays), or rollable electronic devices with housings slidable with respect to each other and at least partially rollable or unrollable displays.

FIG. 5 is an exploded perspective view illustrating a protective member, a camera assembly, and a rear plate.

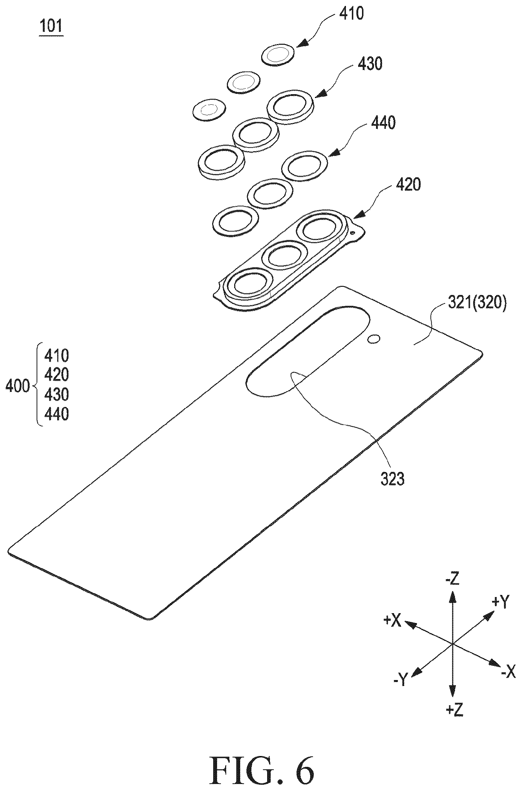

FIG. 6 is an exploded perspective view illustrating a protective member and a rear plate.

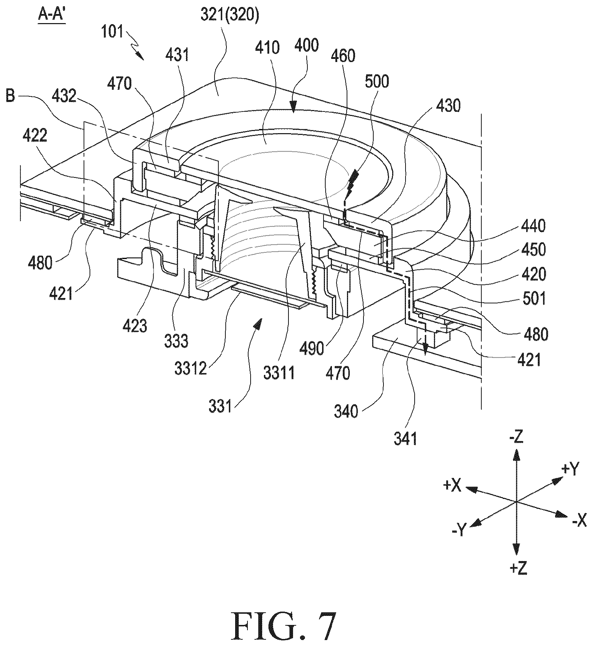

The embodiments of FIGS. 5 and 6 may be combined with the embodiments of FIGS. 1 to 4, or the embodiments of FIGS. 7 to 13.

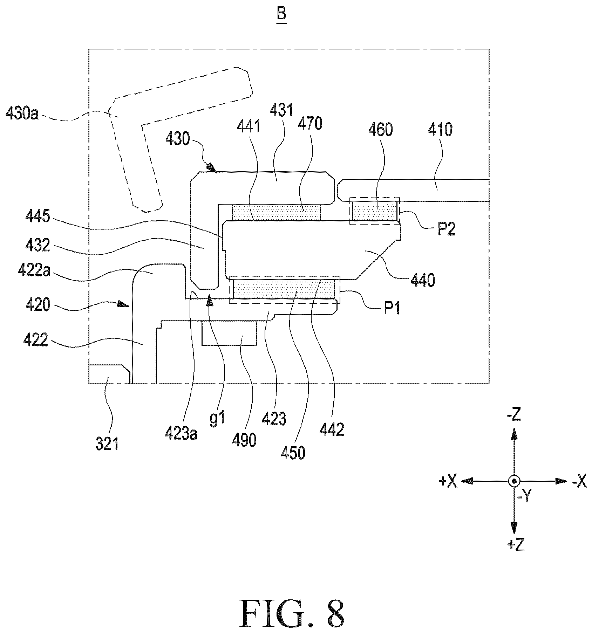

The configurations of the embodiments of FIGS. 5 and 6 may be identical in whole or part to the configurations of the embodiments of FIGS. 1 to 4, or the configurations of the embodiments of FIGS. 8 to 13.

The electronic device 101 (e.g., the electronic device 101 of FIGS. 2 to 4) may include a second housing 320 (e.g., the second housing 220 of FIG. 4). The second housing 320 may form at least a portion of an outer surface of the electronic device 101.

The second housing 320 may include a rear plate 321 (e.g., the second rear cover 290 of FIG. 4).

The rear plate 321 may face opposite to at least a portion (e.g., the second display area 232 of FIG. 4) of the display (e.g., the flexible display 230 of FIG. 4). For example, at least a portion of the display may be disposed opposite to the rear plate 321 at the second housing 320.

At least a portion of the display may be disposed on the front surface of the second plate (e.g., the second plate 222 of FIG. 4) of the second housing 320, and the rear plate 321 may be disposed on the rear surface of the second plate (e.g., the surface facing the -Z direction of FIG. 4).

The electronic device 101 may include a rear camera assembly 330 (e.g., the camera module 206 of FIGS. 2 and 3 or the camera assembly 204 of FIG. 4).

The rear camera assembly 330 may be aligned with the opening 323 formed in the rear plate 321. The rear camera assembly 330 may face opposite to at least a portion of the display in the electronic device 101. For example, the rear camera assembly 330 may be disposed to capture an external subject of the electronic device 101 faced by the rear of the second housing 320. At least a portion of the display may be disposed to provide a visual image to the outside of the electronic device 101 faced by the front surface of the second housing 320.

The rear camera assembly 330 may include a plurality of camera modules 331. Hereinafter, for convenience of description, any one of the plurality of camera modules 331 (hereinafter referred to as "rear camera") is described as an example, but the description may be applied and/or understood equally to the remaining camera module(s). Further, the description of the rear camera 331 and the protective member 400 of the disclosure is described with an example in which the electronic device 101 includes three rear cameras 331 as illustrated, but the disclosure is not limited thereto. For example, the disclosure may be applied and/or understood equally to electronic devices including one rear camera, electronic devices including two rear cameras, or electronic devices including four or more rear cameras.

The rear camera 331 may be aligned with the opening 331 formed in the rear plate 321. The opening 331 may include a hole formed through the rear plate 321. For example, at least a portion of the rear camera 331 may be disposed inside the second housing 320. The rest of the rear camera 331 may penetrate the opening 331 to protrude with respect to the outer surface of the rear plate 321 of the second housing 320 (e.g., the surface facing the -Z direction of FIGS. 5 and 6).

The electronic device 101 may include a protective member 400 (e.g., the cover plate 299 of FIG. 4).

The protective member 400 may be fixed to the rear plate 321 and disposed to cover the rear camera 331.

The protective member 400 may wrap the rear camera 331 to protect the rear camera 331 disposed to protrude with respect to the outer surface of the rear plate 321. The protective member 400 may be defined and/or referred to as a camera protective member, a camera protective structure, or a camera decorative member.

The protective member 400 may be formed as an assembly of a plurality of components. For example, the protective member 400 may include a camera window 410, a lower bracket 420, an upper bracket 430, and a middle bracket 440.

The lower bracket 420 may be configured to support the upper bracket 430, the middle bracket 440, and the camera window 410. According to the illustrated example, there may be one lower bracket 420, but the disclosure is not limited thereto.

The number of each of the camera window 410, the upper bracket 430, and the middle bracket 440 may be three, but the disclosure is not limited thereto. For example, the number of each of the camera window 410, the upper bracket 430, and the middle bracket 440 may be provided to correspond to the number of rear cameras 331.

The components 410, 420, 430, and 440 of the protective member 400 may provide a structure where waterproof areas formed by the components of the protective member 400 are not damaged when an external impact is applied to the electronic device 101.

FIG. 7 is a perspective cross-sectional view of an electronic device taken along line A-A' of FIG. 2.

FIG. 8 is an enlarged, cross-sectional view illustrating portion B of FIG. 7;

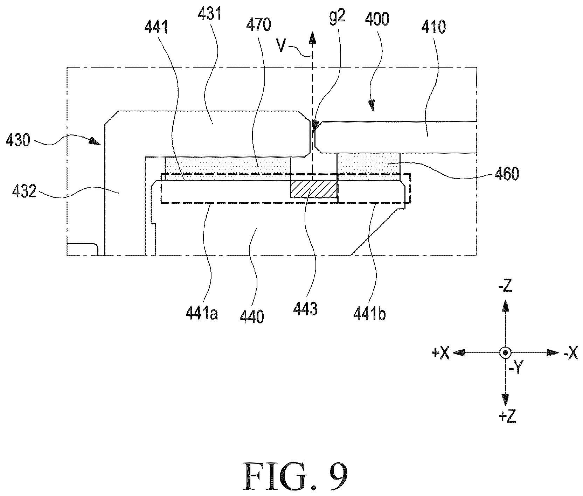

The embodiments of FIGS. 7 and 8 may be combined with the embodiments of FIGS. 1 to 6, or the embodiments of FIGS. 9 to 13.

The configurations of the embodiments of FIGS. 7 and 8 may be identical in whole or part to the configurations of the embodiments of FIGS. 1 to 6, or the configurations of the embodiments of FIGS. 9 to 13.

The electronic device 101 (e.g., the electronic device 101 of FIGS. 2 to 6) may include a second housing 320 (e.g., the second housing 220 of FIG. 4 or the second housing 320 of FIGS. 5 and 6) including the rear plate 321 (e.g., the rear plate 321 of FIGS. 5 and 6).

The electronic device 101 may include a rear camera 331 (e.g., the rear camera 331 of FIGS. 5 and 6) and a protective member 400 (e.g., the protective member 400 of FIGS. 5 and 6).

The rear camera 331 may include a barrel 3311 and an image sensor 3312 disposed inside the barrel 3311.

The rear camera assembly (e.g., the rear camera assembly 330 of FIG. 5) may include a camera support member 333 configured to support the plurality of rear cameras. For example, the camera support member 333 may be disposed inside the second housing 320, and the plurality of rear cameras may be disposed, coupled, or mounted on the camera support member 333.

The barrel 3311 may be supported by the camera support member 333. For example, the barrel 3311 may be coupled to the camera support member 333. Although not illustrated, the rear camera 331 may include at least one lens disposed inside the barrel 3311.

The image sensor 3312 may be disposed inside the barrel 3311. The image sensor 3312 may be configured to convert light that is reflected from a subject positioned in a direction where the rear camera 331 is oriented and passes through at least one lens disposed inside the barrel 3311 into an electrical signal. The image sensor 3312 may be electrically connected to the circuit board 340 to be electrically connected to the processor (e.g., the processor 120 of FIG. 1) and the memory (e.g., the memory 130 of FIG. 1) of the circuit board 340. Although not illustrated, the rear camera 3311 and/or the image sensor 3311 may be electrically connected to the circuit board 340 through a connecting board (e.g., FPCB).

At least a portion of the rear camera 331 (e.g., at least a portion of the barrel 3311) may be disposed to protrude with respect to the outer surface of the rear plate 321 (e.g., the surface facing the -Z direction of FIG. 7).

The protective member 400 may be disposed to protect the rear camera 331 that is at least partially protruding or exposed to the outer surface of the rear plate 321. For example, the protective member 400 may be fixed to the rear plate 321, and may be disposed to at least partially protrude with respect to the outer surface of the rear plate 321. The protective member 400 may be disposed to surround the rear camera 331.

The protective member 400 may include a camera window 410, a lower bracket 420, an upper bracket 430, and a middle bracket 440.

The camera window 410 may be disposed to cover the rear camera 331. For example, the camera window 410 may be disposed over the rear camera 331.

The camera window 410 may include a glass. At least a portion of the camera window 410 may be formed of a material transparent to light in a designated wavelength band (e.g., light in a visible light band), but the disclosure is not limited thereto. A printed layer formed of a material that is opaque to light in a visible light band may be formed on the rest of the camera window 410. The printed layer may prevent the internal components of the electronic device 101 from being visually visible to the outside of the electronic device 101.

The lower bracket 420 (e.g., the first bracket) may surround the rear camera 331. The lower bracket 420 may include a first lower portion 421, a second lower portion 422, and a third lower portion 423.

According to an example, the lower bracket (420) may be fixed to the inner surface of the rear plate 321 (e.g., the surface facing the +Z direction of FIGS. 7 and 8). For example, the first lower portion 421 of the lower bracket 420 may be fixed to the surface of the rear plate 321 facing the inner space of the electronic device 101.

The first lower portion 421 may be supported by the inner surface of the rear plate 321, which is opposite to the outer surface of the rear plate 321. For example, as the first lower portion 421 is fixed or supported by the inner surface of the rear plate 321, the lower bracket 420 and/or the protective member 400 may be restricted, prevented, and/or decreased from being separated to the outside of the electronic device 101.

The lower bracket 420 may be partially disposed in the opening of the rear plate 321 (e.g., the opening 323 of FIGS. 5 and 6). The lower bracket 420 may protrude with respect to the outer surface of the rear plate 321.

The second lower portion 422 may extend from an inner end of the first lower portion 421 toward the outside of the electronic device 101. For example, the second lower portion 422 may be disposed substantially perpendicular to the first lower portion 421, but the disclosure is not limited thereto. At least a portion of the second lower portion 422 may be disposed to penetrate the opening of the rear plate 321. The rest of the second lower portion 422 may be disposed to protrude or be exposed relative to the outer surface of the rear plate 321. At least a portion 422a of the second lower portion 422 may protrude relatively to the third lower portion 423, and may be disposed to cover an outer surface of the second upper portion 432.

The second lower portion 422 may be disposed to surround the outer surface of the camera support member 333 or the rear camera 331.

The third lower portion 423 may extend from the second lower portion 422 toward the barrel 3311 of the rear camera 331. The third lower portion 423 may be disposed substantially perpendicular to the second lower portion 422, but the disclosure is not limited thereto. The third lower portion 423 may be disposed substantially parallel to the first lower portion 421, but the disclosure is not limited thereto.

The third lower portion 423 may be configured to support the second surface 442 (e.g., the second surface 442 of FIG. 7) of the middle bracket 440.

The lower bracket 420 may be formed of a metal material (e.g., aluminum) to provide a metal design for at least a portion of the exterior of the electronic device 101, but the disclosure is not limited thereto.

The upper bracket 430 (e.g., the second bracket) may be disposed outside the lower bracket 420. The upper bracket 430 may be formed of a metal material (e.g., aluminum) to provide a metal design for at least a portion of the exterior of the electronic device 101, but the disclosure is not limited thereto.

The upper bracket 430 may be configured to provide a metallic decoration cover covering a portion of the middle bracket 440.

The upper bracket 430 may include a first upper portion 431 and a second upper portion 432.

The first upper portion 431 may be disposed side by side with the camera window 410. The first upper portion 431 may be fixed to the first surface 441 of the middle bracket 440.

The second upper portion 432 may extend from the first upper portion 431 toward the lower bracket 420. The second upper portion 432 may be disposed substantially perpendicular to the first upper portion 431, but the disclosure is not limited thereto.

The second upper portion 432 may be disposed to cover the outer surface of the middle bracket 440 (e.g., the outer lateral surface (445 of FIG. 8).

The middle bracket 440 (e.g., the third bracket) may be at least partially disposed between the upper bracket 430 and the lower bracket 420.

The middle bracket 440 may include a first surface 441, a second surface 442, and an outer lateral surface 445. The first surface 441 may face the first upper portion 431. The second surface 442 may face the third lower portion 423.

The first surface 441 may face the outside of the electronic device 101, and the second surface 442 may be opposite to the first surface 441. For example, the second surface 442 may face the inside of the electronic device 101.

The outer lateral surface 445 may connect the first surface 441 and the second surface 442 and may face the second upper portion 432.

The middle bracket 440 may include a non-metallic material (e.g., an injection-molded material or a plastic material), but the disclosure is not limited thereto. For example, the middle bracket 440 may include, but is not limited to, polycarbonate (PC). The specific gravity of the middle bracket 440 may be smaller than the specific gravity of the upper bracket 430. The middle bracket 440 may include a metal material having a specific gravity smaller than that of the upper bracket 430.

As the middle bracket 440 has a specific gravity smaller than that of the upper bracket 430, the total weight of the protective member 400 may be decreased. For example, as compared with when the middle bracket 440 is formed of the same material as the upper bracket 430, or the middle bracket 440 is integrally formed with the upper bracket 430 of the same material, the middle bracket 440 of the protective member 400 of the disclosure has a smaller specific gravity than that of the upper bracket 430, relatively reducing the weight of the protective member 400 and/or the electronic device 101.

The protective member 400 may include a waterproofing member 450 (e.g., a first waterproofing member).

The waterproofing member 450 may include a waterproofing material. The waterproofing member 450 may include a waterproofing tape, but is not limited thereto, and may include a waterproof bonding.

The waterproofing member 450 may be disposed between the second surface 442 of the middle bracket 440 and the lower bracket 420. The waterproofing member 450 may be adhered to the second surface 442 of the middle bracket 440 and the third lower portion 423 of the lower bracket 420.

The protective member 400 may include another waterproofing member 460 (e.g., a second waterproofing member).

The other waterproofing member 460 may include a waterproofing material. The other waterproofing member 460 may include a waterproofing tape, but is not limited thereto, and may include a waterproof bonding.

The other waterproofing member 460 may be disposed between the first surface 441 of the middle bracket 440 and the camera window 410. The other waterproofing member 450 may be adhered to the first surface 441 of the middle bracket 440 and the lower surface of the camera window 410 (e.g., the surface facing the +Z direction of FIGS. 7 and 8).

The protective member 400 may include an adhesive member 470.

The adhesive member 470 may include an adhesive material. The adhesive member 470 may include a double-sided tape, but is not limited thereto, and may include bonding.

The adhesive member 470 may be disposed between the first upper portion 431 of the upper bracket 430 and the first surface 441 of the middle bracket 440. The adhesive member 470 may be adhered to the first upper portion 431 and the first surface 441.

The camera window 410 may be fixed to the first surface 441 of the middle bracket 440 through the other waterproofing member 460. The upper bracket 430 may be fixed to the first surface 441 of the middle bracket 440 through the adhesive member 470. The camera window 410 and the upper bracket 430 may be individually fixed to the first surface 441.

The waterproofing member 450 may be configured to seal between the middle bracket 440 and the lower bracket 420. For example, the waterproofing member 450 may be disposed between the second surface 442 of the middle bracket 440 and the lower bracket 420 to waterproof the space between the second surface 442 of the middle bracket 440 and the lower bracket 420. For example, the waterproofing member 450 may be disposed between the second surface 442 of the middle bracket 440 and the third lower portion 423 of the lower bracket 420, so that the waterproofing member 450 may be configured to block, reduce, and/or restrict foreign objects or moisture from entering the electronic device 101 from the outside of the electronic device 101 through the space between the middle bracket 440 and the lower bracket 420.

The waterproofing member 450 may be configured to waterproof the space between the middle bracket 440 and the lower bracket 420 regardless of the state of the upper bracket 430. For example, when an external impact is applied to the electronic device 101 (e.g., falling), the upper bracket 430 may be separated or detached from the middle bracket 440 (e.g., see 430a of FIG. 8). The waterproofing member 450 may be configured to waterproof between the first surface 442 and the second surface 442 and the lower bracket 420 regardless of whether the upper bracket 430 is fixed to the first surface 441 of the middle bracket 440 or the upper bracket 430 is separated from the middle bracket 440 by an external impact applied to the electronic device 101. For example, the first waterproof area P1 defined or formed by the waterproofing member 450 may be maintained regardless of the state of the upper bracket 430 with respect to the middle bracket 440.

The waterproofing member 450 may be defined and/or referred to as the first waterproofing member 450. The first waterproofing member 450 may be disposed between the middle bracket 440 and the lower bracket 420. The first waterproofing member 450 may be configured to provide a first waterproof seal (e.g., the first waterproof area P1) between the middle bracket 440 and the lower bracket 420. The first waterproof seal between the middle bracket 440 and the lower bracket 420 may be maintained regardless of whether the upper bracket 430 is separated from the middle bracket 440 by an external impact.

The other waterproofing member 460 may allow the camera window 410 to be fixed to the middle bracket 440 regardless of the state of the upper bracket 430. For example, the camera window 410 and the upper bracket 430 may be individually fixed to the middle bracket 440. Accordingly, regardless of whether the upper bracket 430 is fixed to the first surface 441 of the middle bracket 440 or the upper bracket 430 is separated from the middle bracket 440 by an external impact applied to the electronic device 101, the camera window 410 may be fixed to the first surface 441 of the middle bracket 440. Accordingly, the rear camera 331 or at least one lens of the rear camera 331 remains covered by the camera window 410, so that direct exposure of the rear camera 331 or at least one lens to the outside of the electronic device 101 may be limited, prevented, and/or decreased.

The other waterproofing member 460 may be configured to seal between the middle bracket 440 and the camera window 410. For example, the other waterproofing member 460 may be disposed between the first surface 441 of the middle bracket 440 and the camera window 410 to waterproof the space between the first surface 441 of the middle bracket 440 and the camera window 410. For example, the other waterproofing member 460 may be disposed between the first surface 441 of the middle bracket 440 and the lower surface (e.g., the surface facing the +Z direction of FIG. 8) of the camera window 410, so that the other waterproofing member 460 may be configured to block, reduce, and/or restrict foreign objects or moisture from entering the electronic device 101 from the outside of the electronic device 101 through the space between the middle bracket 440 and the camera window 410.

The other waterproofing member 460 may be configured to waterproof the space between the middle bracket 440 and the camera window 410 regardless of the state of the upper bracket 430. For example, when an external impact is applied to the electronic device 101 (e.g., falling), the upper bracket 430 may be separated or detached from the middle bracket 440 (e.g., see 430a of FIG. 8). The other waterproofing member 460 may be configured to waterproof between the middle bracket 440 and the camera window 410 regardless of whether the upper bracket 430 is fixed to the first surface 441 of the middle bracket 440 or the upper bracket 430 is separated from the middle bracket 440 by an external impact applied to the electronic device 101. For example, the second waterproof area P2 defined or formed by other waterproofing members 460 may be maintained regardless of the state of the upper bracket 430 with respect to the middle bracket 440.

The other waterproofing member 460 may be defined and/or referred to as a second waterproofing member 460. The second waterproofing member 460 may be disposed between the middle bracket 440 and the camera window 410. The second waterproofing member 460 may be configured to provide a second waterproof seal (e.g., a second waterproof area P2) between the middle bracket 440 and the camera window 410. The second waterproof seal between the middle bracket 440 and the camera window 410 may be maintained regardless of whether the upper bracket 430 is separated from the middle bracket 440 by an external impact.

As the middle bracket 440 has a specific gravity smaller than that of the upper bracket 430, when an external impact is applied to the electronic device 101, an impact load may be relatively concentrated on the upper bracket 430. Accordingly, when an external impact is applied to the electronic device 101, even when the upper bracket 430 is separated from the middle bracket 440, the middle bracket 440 may not be separated from the lower bracket 420.

When the intensity of the external impact applied to the electronic device 101 is smaller than or equal to a first threshold, the upper bracket 430 may not be separated from the middle bracket 440, and the middle bracket 440 may not be separated from the lower bracket 420.

When the intensity of the external impact applied to the electronic device 101 is larger than or equal to a second threshold larger than the first threshold, the upper bracket 430 may be separated from the middle bracket 440, and the middle bracket 440 may be separated from the lower bracket 420.

When the intensity of the external impact applied to the electronic device 101 exceeds the first threshold and is smaller than the second threshold, the upper bracket 430 may be separated from the middle bracket 440, and the middle bracket 440 may not be separated from the lower bracket 420.

When the intensity of the external impact applied to the electronic device 101 falls in a specific range, the separation of both the upper bracket 430 and the middle bracket 440 may be limited and/or decreased, and the upper bracket 430 may be separated from the middle bracket 440, but the middle bracket 440 may not be separated from the lower bracket 420. Accordingly, the waterproof areas P1 and P2 formed on the first and second surfaces 441 and 442 of the middle bracket 440 may be maintained without being damaged.

The electronic device 101 may include an elastic member 480 (e.g., a first elastic member). The elastic member 480 may include an elastic material. The elastic member 480 may include, but is not limited to, a sponge.

The elastic member 480 may be disposed between the inner surface of the rear plate 321 and the first lower portion 421 of the lower bracket 420. The elastic member 480 may be configured to compensate for assembly tolerances when the lower bracket 420 is assembled to the rear plate 321, or to mitigate excessive impact transmission between the lower bracket 420 and the rear plate 321.

The electronic device 101 may include another elastic member (490 (e.g., a second elastic member). The other elastic member 490 may include an elastic material. The other elastic member 490 may be disposed between the camera support member 333 and the third lower portion 423 of the lower bracket 420. The other elastic members 490 may be configured to compensate for assembly tolerances when the rear camera assembly (e.g., the rear camera assembly 330 of FIG. 5) is assembled to the lower bracket 420 or the protective member 400, or to mitigate excessive impact transmission between the camera support member 333 and the lower bracket 420.

The upper bracket 430 may be disposed side by side with the camera window 410 and spaced apart from the camera window 410. As the camera window 410 and the upper bracket 430 are spaced apart from each other, static electricity 500 or surge generated from the outside of the electronic device 101 may flow through the space therebetween.

The protective member 400 may form at least a portion of a discharge path of the static electricity 500. For example, the protective member 400 may form at least a portion of a conductive path 501 that allows static electricity 500 to be transferred to the ground of the electronic device 101 as the upper bracket 430 and the lower bracket 420 are formed of a metal material.

An end (e.g., an end of the second upper portion 432) of the upper bracket 430 may contact the third upper portion 423 of the lower bracket 420 to, together with the lower bracket 420, form at least a portion of the conductive path 501 to transfer static electricity to the ground of the electronic device 101.

The end (e.g., the end of the second upper portion 432) of the upper bracket 430 may be spaced apart from the third upper portion 423 of the lower bracket 420 with a gap g1 (e.g., the gap g1 of FIG. 8) therebetween. The end of the upper bracket 430 may be disposed adjacent to the third upper portion 423 of the lower bracket 420. For example, the size of the gap g1 may have a size that allows static electricity 500 to be transferred between the end of the upper bracket 430 and the third upper portion 423 of the lower bracket 420 even when they are spaced apart. In other words, even when the upper bracket 430 and the lower bracket 420 are spaced apart from each other, a conductive path may be formed therebetween.

The upper bracket 430 and the lower bracket 420 may be formed of separate members, but the disclosure is not limited thereto. For example, the upper bracket 430 and the lower bracket 420 may be integrally formed.

The electronic device 101 may include a circuit board 340 (e.g., the second circuit board 264 of FIG. 4). The circuit board 340 may be disposed inside the second housing 320. The circuit board 340 may include a ground 341. The ground 341 may include a conductive gasket (e.g., a gasket sponge) disposed on one surface of the circuit board 340, but the disclosure is not limited thereto. The ground 341 may be provided through a ground plane of the circuit board 340.

The first lower portion 421 of the lower bracket 420 may contact the ground 341 of the circuit board 340. Accordingly, the static electricity 500 introduced from the outside of the electronic device 101 may be transferred to the ground 341 of the circuit board 340 through the upper bracket 430 and the lower bracket 420 to be discharged.

As the protective member 400 forms at least a portion of the conductive path 501, electrical/electronic components disposed inside the electronic device 101 may be limited, decreased, and/or prevented from damage to the circuits or losing data by the static electricity 500.

FIG. 9 is a cross-sectional view illustrating a protective member.

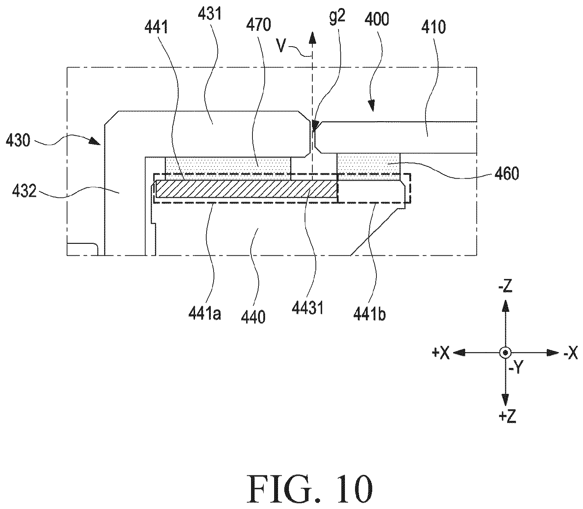

FIG. 10 is a cross-sectional view illustrating a protective member;

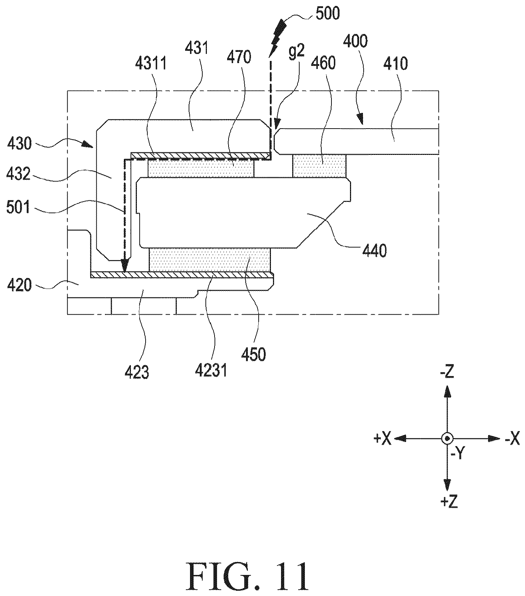

The embodiments of FIGS. 9 and 10 may be combined with the embodiments of FIGS. 1 to 8, or the embodiments of FIGS. 11 to 13.

The configurations of the embodiments of FIGS. 9 and 10 may be identical in whole or part to the configurations of the embodiments of FIGS. 1 to 8, or the configurations of the embodiments of FIGS. 11 to 13.

The protective member 400 (e.g., the protective member 400 of FIGS. 5 to 8) may include a camera window 410 and an upper bracket 430 disposed side by side with the camera window 410.

The camera window 410 and the first upper portion 431 of the upper bracket 430 may be disposed side by side, and a gap g2 may be formed therebetween. For example, the first upper portion 431 and the camera window 410 may be spaced apart by a designated gap g2.

The first surface 441 of the middle bracket 440 may be seen from the outside of the electronic device through the gap g2 between the upper bracket 430 and the camera window 410 as in the V direction illustrated.

At least a portion of the first portion 441a of the first surface 441 of the middle bracket 440 may be positioned substantially corresponding to the gap g2 to be visually exposed to the outside of the electronic device.

At least one portion 443 and 4431 of the first portion 441a may have a surface roughness larger than that of the second portion 441b different from that of the first portion 441a through corrosion treatment (e.g., sand blasting or etching). Accordingly, at least one portion 443 and 4431 of the middle bracket 440 that may be seen from the outside of the electronic device through the gap g2 between the camera window 410 and the upper bracket 430 may be limited and/or decreased in gloss when viewed from the outside of the electronic device or the protective member 400. Accordingly, the design of the protective member 400 and the electronic device may be enhanced.

The second portion 442b different from the first portion 441a of the middle bracket 440 may be an area where the other waterproofing member 460 is disposed. The first portion 441a may be the remaining area of the first surface 441 other than the second portion 442b.

The second portion 442b is not subjected to corrosion treatment so that the surface thereof may be smooth. The surface roughness of the second portion 442b may be smaller than that of the at least one portion 443 and 4431. When the other waterproofing member 460 is adhered to the second portion 442b, adhesion therebetween may be enhanced. Accordingly, the waterproof performance of the waterproof area between the camera window 410 and the middle bracket 440 formed by the other waterproofing member 460 may be enhanced.

Referring to FIG. 9, at least a portion 443 of the first portion 441a of the corroded first surface 441 may be formed only in a portion that may be seen through the gap g2. For example, at least a portion 443 may be formed in a portion that does not correspond to the adhesive member 470.

Referring to FIG. 10, at least a portion 4431 of the first portion 441a of the corroded first surface 441 may be extended to be formed in both the portion visible through the gap g2 and the portion corresponding to the adhesive member 470, but the disclosure is not limited thereto.

FIG. 11 is a cross-sectional view illustrating a protective member.

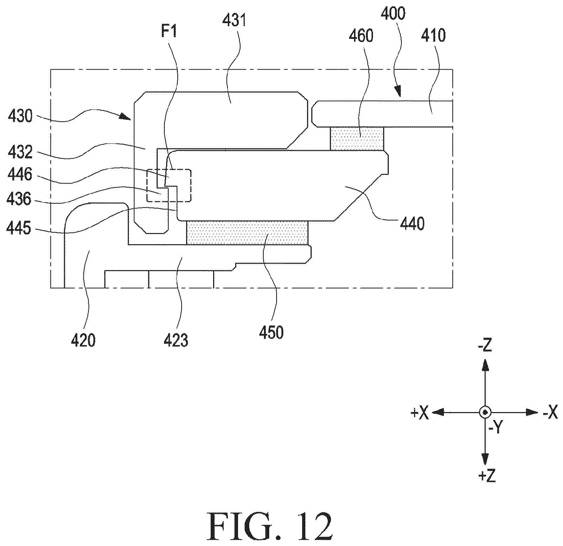

The embodiment of FIG. 11 may be combined with the embodiments of FIGS. 1 to 10, or the embodiments of FIGS. 12 to 13.

The configurations of the embodiments of FIG. 11 may be identical in whole or part to the configurations of the embodiments of FIGS. 1 to 10, or the configurations of the embodiments of FIGS. 12 to 13.

Referring to FIG. 11, the protective member 400 (e.g., the protective member 400 of FIGS. 5 to 10) may include a camera window 410, a lower bracket 420, an upper bracket 430, and a middle bracket 440.

The oxide layer of one surface 4311 (e.g., the surface facing the +Z direction of FIG. 11) facing the middle bracket 440, of the first upper portion 431 of the upper bracket 430, may be removed through a laser process. In other words, the oxide layer of one surface 4311 may be removed to expose the metal material (e.g., aluminum) of the upper bracket 430. Accordingly, the static electricity 500 introduced through the gap g2 between the camera window 410 and the upper bracket 430 may be transferred from the upper bracket 430 to the lower bracket 420 through one surface 4311 of the first upper portion 431 having conductivity.

The oxide layer of one surface 4231 (e.g., the surface facing the -Z direction of FIG. 11) of the third lower portion 423 of the lower bracket 420 may be removed through a laser process. In other words, the oxide layer of one surface 4231 may be removed to expose the metal material (e.g., aluminum) of the lower bracket 420. Accordingly, the static electricity 500 discharged from the second upper portion 432 of the upper bracket 430 may be transferred on the lower bracket 420 through one surface 4231 of the third lower portion 423 having conductivity.

At least a portion of the upper bracket 430 and at least a portion of the lower bracket 420 may form at least a portion of the conductive path 501 through which the static electricity 500 may be transferred as the oxide layers of the surfaces thereof are removed through the laser process.

FIG. 12 is a cross-sectional view illustrating a protective member.

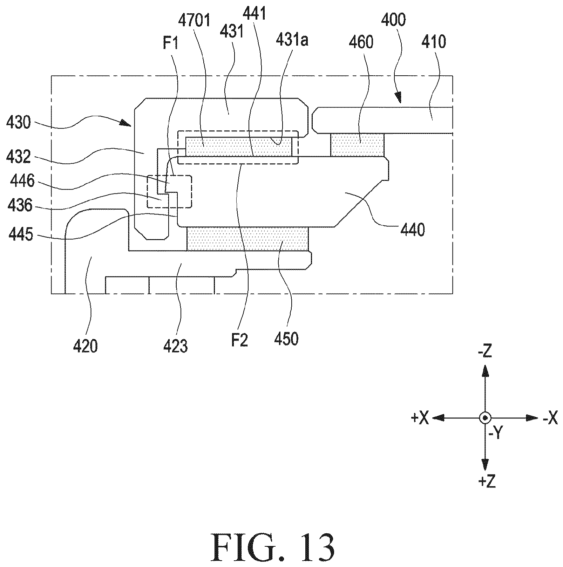

FIG. 13 is a cross-sectional view illustrating a protective member.

The embodiments of FIGS. 12 and 13 may be combined with the embodiments of FIGS. 1 to 11.

The configurations of the embodiments of FIGS. 12 and 13 may be identical in whole or part to the configuration of the embodiments of FIGS. 1 to 11.

Referring to FIGS. 12 and 13, the protective member 400 (e.g., the protective member 400 of FIGS. 5 to 11) may include a camera window 410, a lower bracket 420, an upper bracket 430, and a middle bracket 440.

Referring to FIG. 12, the upper bracket 430 may include a first protruding portion 436 protruding from a surface (e.g., the surface facing the -X direction of FIG. 12) facing the middle bracket 440 of the second upper portion 432 of the upper bracket 430. The middle bracket 440 may include a second protruding portion 446 protruding from the outer lateral surface 445 of the middle bracket 440.

The second protruding portion 446 may overlap the first protruding portion 436. The first protruding portion 436 may be at least partially disposed between the second protruding portion 446 and the third lower portion 423 of the lower bracket 420.

The first protruding portion 436 and the second protruding portion 446 may form a first fixed area F1. Accordingly, when an external impact is applied to the electronic device, the separation of the upper bracket 430 from the middle bracket 440 may be limited and/or decreased.

Referring to FIG. 13, an adhesive member 4701 (e.g., the adhesive member 470 of FIG. 8) may be disposed between the first upper portion 431 of the upper bracket 430 and the first surface 441 of the middle bracket 440. The adhesive member 4701 may be disposed on a stepped portion 431a formed on one surface of the first upper portion 431 facing the middle bracket 440 (e.g., the surface facing the +Z direction of FIG. 13). The stepped portion 431a of one surface of the first upper portion 431 may be recessed to be stepped with respect to another portion of the one surface of the first upper portion 431.

The adhesive member 4701 may form a second fixed area F2. Accordingly, when an external impact is applied to the electronic device, the separation of the upper bracket 430 from the middle bracket 440 may be limited and/or decreased.

As the electronic device is downsized and/or thinned, it may be difficult to secure a sufficient space for disposing the camera inside the electronic device. A high-performance camera has limitations when it comes to size reduction. Thus, when a high-performance camera is disposed in a thinned electronic device, at least a portion of the camera may be exposed to the outside of the electronic device through a portion of the outer surface of the electronic device.

In this case, in addition to the housing forming at least a portion of the exterior of the electronic device, a separate protective structure for protecting the camera exposed to the outside may be required.

On the other hand, as the protective structure is formed of a separate member from the housing of the electronic device, when an external impact is applied to the electronic device, it may be separated from the housing.

According to an embodiment of the disclosure, there may be provided an electronic device including a camera protective structure forming a waterproof area while protecting the rear camera.

However, the objects of the disclosure are not limited to the foregoing objects but rather may be expanded in various manners without departing from the spirit and scope of the disclosure.

According to an embodiment, there may be provided an electronic device including a camera protective structure capable of maintaining waterproof areas respectively formed on different surfaces of the middle bracket although the upper bracket is separated from the middle bracket.

According to an embodiment, there may be provided an electronic device including a camera protective structure lightened as the middle bracket has a smaller specific gravity than that of the upper bracket.

Effects obtainable from the disclosure are not limited to the above-mentioned effects, and other effects not mentioned may be apparent to one of ordinary skill in the art from the following description.

According to an embodiment, an electronic device 101 may comprise a housing 220, 320 forming at least a portion of an outer surface of the electronic device 101 and including a rear plate 290, 321.

According to an embodiment, the electronic device 101 may comprise a display 230, 232 disposed opposite to the rear plate 290, 321 on the housing 220, 320.

According to an embodiment, the electronic device 101 may comprise a camera 331 disposed in the housing 220, 320 and aligned with an opening 323 formed in the rear plate 290, 321.

According to an embodiment, the electronic device 101 may comprise a camera window 410 disposed to cover the camera 331.

According to an embodiment, the electronic device 101 may comprise a lower bracket 420 at least partially disposed on an inner surface of the rear plate 290, 321 to protrude through the opening 323 formed in the rear plate 290, 321.

According to an embodiment, the electronic device 101 may comprise a middle bracket 440 disposed on the lower bracket 420 and configured to support the camera window 410.

According to an embodiment, the electronic device 101 may comprise an upper bracket 430 disposed on the middle bracket 440.

According to an embodiment, the electronic device 101 may comprise a first waterproofing member 450 disposed between the middle bracket 440 and the lower bracket 420 to provide a first waterproof seal between the middle bracket 440 and the lower bracket 420.

According to an embodiment, the electronic device 101 may comprise a second waterproofing member 460 disposed between the middle bracket 440 and the camera window 410 to provide a second waterproof seal between the middle bracket 440 and the camera window 410.

According to an embodiment, the upper bracket 430 may be configured to provide a metallic decoration cover to cover a portion of the middle bracket 440.

According to an embodiment, the first waterproof seal between the middle bracket 440 and the lower bracket 420 and the second waterproof seal between the middle bracket 440 and the camera window 410 may be maintained regardless of whether the upper bracket 430 is separated from the middle bracket 440 by an external impact.

According to an embodiment, the camera window 410 and the upper bracket 430 may be individually fixed to a first surface 441 of the middle bracket 440.

According to an embodiment, the middle bracket 440 may include a non-metal material having a specific gravity smaller than a specific gravity of the upper bracket 440.

According to an embodiment, when an intensity of the external impact applied to the electronic device 101 exceeds a first threshold and is less than a second threshold greater than the first threshold, the upper bracket 430 may be configured to be separated from the middle bracket 440, and the middle bracket 440 may be configured not to be separated from the lower bracket 420.

According to an embodiment, at least a portion, which is visible from an outside of the electronic device 101 through a gap g2 between the camera window 410 and the upper bracket 430, of the first surface 441 of the middle bracket 440 may have a surface roughness greater than a surface roughness of another portion of the first surface 441 of the middle bracket 440.

According to an embodiment, the second waterproofing member 460 may include a waterproofing tape disposed on the another portion of the first surface 441 of the middle bracket440.

According to an embodiment, an end of the upper bracket 430 may contact the lower bracket 420 to, together with the lower bracket 420, form at least a portion of a conductive path that allows static electricity to be transmitted to a ground of the electronic device 101.

According to an embodiment, an end of the upper bracket 430 may be spaced apart from the lower bracket 420 by a gap g1 having a size that allows the upper bracket 430 to, together with the lower bracket 420, form a conductive path that allows static electricity to be transferred to a ground of the electronic device 101.

According to an embodiment, the upper bracket 430 may include a first upper portion 431 disposed side by side with the camera window 410 and fixed to the first surface 441 of the middle bracket 440, and a second upper portion 432 extending from the first upper portion 431 toward the lower bracket 420 and covering an outer lateral surface 445 connecting the first surface 441 and the second surface 442 of the middle bracket 440.

According to an embodiment, the electronic device 101 may further comprise an adhesive member 470 including an adhesive material and disposed between the upper portion 431 of the upper bracket 430 and the first surface 441 of the middle bracket 440.

According to an embodiment, the lower bracket 420 may include a first lower portion 421 supported by the inner surface of the rear plate 290, 321 opposite to an outer surface of the rear plate 290, 321, a second lower portion 422 extending from the first lower portion 421, disposed to penetrate the opening 323 of the rear plate 290, 321, and protruding with respect to the outer surface of the rear plate 290, 321, and a third lower portion 423 extending from the second lower portion 422 and supporting the second surface 442 of the middle bracket 440.

According to an embodiment, the electronic device 101 may further comprise an elastic member 480 including an elastic material and disposed between the first lower portion 421 and the inner surface of the rear plate 290, 321.

According to an embodiment, the electronic device 101 may further comprise a camera support member 333 supporting the camera 331 and disposed in the housing 220, 320.

According to an embodiment, the electronic device 101 may further comprise another elastic member 490 including an elastic material and disposed between the first lower portion 421 and the camera support member 333.

According to an embodiment, the electronic device 101 may further comprise a circuit board 340 electrically connected to the camera 331, disposed in the housing 220, 320, and including a ground 341 electrically connected to the first lower portion 421.

According to an embodiment of the disclosure, an electronic device 101 may comprise a housing 220, 320 forming at least a portion of an outer surface of the electronic device 101 and including a rear plate 290, 321.

According to an embodiment, the electronic device 101 may comprise a display 230, 232 disposed opposite to the rear plate 290, 321 on the housing 220, 320.

According to an embodiment, the electronic device 101 may comprise a camera 331 disposed in the housing 220, 320 and aligned with an opening 323 formed in the rear plate 290, 321.

According to an embodiment, the electronic device 101 may comprise a camera window 410 disposed to cover the camera 331.

According to an embodiment, the electronic device 101 may comprise a lower bracket 420 fixed to an inner surface of the rear plate 290, 321, surrounding the camera 331, partially disposed in the opening 323 of the rear plate 290, 321, and protruding with respect to an outer surface of the rear plate 290, 321.

According to an embodiment, the electronic device 101 may comprise an upper bracket 430 disposed outside the lower bracket 420.

According to an embodiment, the electronic device 101 may comprise a middle bracket 440 at least partially disposed between the lower bracket 420 and the upper bracket 430 and configured to have the camera window 410 and the upper bracket 430 fixed to a first surface 441 of the middle bracket 440.

According to an embodiment, the electronic device 101 may comprise a first waterproofing member 450 including a waterproofing material and disposed between a second surface 442 of the middle bracket 440, different from the first surface 441, of the middle bracket 440, and the lower bracket 420.

According to an embodiment, the electronic device 101 may comprise a second waterproofing member 460 including a waterproofing material and disposed between the first surface 441 of the middle bracket 440 and the camera window 410.

According to an embodiment, the upper bracket 430 may include a first upper portion 431 disposed side by side with the camera window 410 and fixed to the first surface 441 of the middle bracket 440, and a second upper portion 432 extending from the first upper portion 431 toward the lower bracket 420 and covering an outer lateral surface 445 connecting the first surface 441 and the second surface 442 of the middle bracket 440.

According to an embodiment, the upper bracket 430 may include a first protruding portion 436 protruding from the first upper portion 431.

According to an embodiment, the middle bracket 440 may include a second protruding portion 446 protruding from the outer lateral surface 445 and overlapping the first protruding portion 436.

According to an embodiment, an electronic device 101 may comprise a housing 201 forming at least portion of an outer surface of the electronic device 101 and including a first housing 210 and a second housing 220, 320 rotatably connected to the first housing 210 and including a rear plate 290, 321.

According to an embodiment, the electronic device 101 may comprise a flexible display 230 including a first display area 231 disposed on the first housing 210, a second display area 232 disposed on the second housing 220, 320 and facing opposite to the rear plate 290, 321, and a folding area 233 connected to the first display area 231 and the second display area 232 and configured to be at least partially folded or unfolded.

According to an embodiment, the electronic device 101 may comprise a camera 331 disposed in the second housing 220, 320 and aligned with an opening 323 formed in the rear plate 290, 321.

According to an embodiment, the electronic device 101 may comprise a camera window 410 disposed to cover the camera 331.

According to an embodiment, the electronic device 101 may comprise a lower bracket 420 fixed to an inner surface of the rear plate 290, 321, surrounding the camera 331, partially disposed in the opening 323 of the rear plate 290, 321, and protruding with respect to an outer surface of the rear plate 290, 321.

According to an embodiment, the electronic device 101 may comprise an upper bracket 430 disposed outside the lower bracket 420.

According to an embodiment, the electronic device 101 may comprise a middle bracket 440 at least partially disposed between the lower bracket 420 and the upper bracket 430 and configured to have the camera window 410 and the upper bracket 430 fixed to a first surface 441 of the middle bracket 440.

According to an embodiment, the electronic device 101 may comprise a waterproofing member including a waterproofing material, and disposed between a second surface 442 of the middle bracket 440 and the lower bracket 420 to waterproof a space between the second surface 442 of the middle bracket 440 and the lower bracket 420 regardless of a state of the upper bracket 430 being fixed to the middle bracket 440 or being separated from the middle bracket 440 by an external impact applied to the electronic device 101.

According to an embodiment, the electronic device 101 may comprise an adhesive member 470 disposed between the upper bracket 430 and the middle bracket 440 and including an adhesive material.

While the disclosure has been shown and described with reference to exemplary embodiments thereof, it will be apparent to those of ordinary skill in the art that various changes in form and detail may be made thereto without departing from the scope of the invention as defined by the following claims.

## Claims

1. An electronic device (101) comprising:
a housing (220, 320) forming at least a portion of an outer surface of the electronic device (101) and including a rear plate (290, 321);
a display (230, 232) disposed opposite to the rear plate (290, 321);
a camera (331) disposed in the housing (220, 320) and aligned with an opening (323) formed in the rear plate (290, 321);
a camera window (410) disposed to cover the camera (331);
a lower bracket (420) at least partially disposed on an inner surface of the rear plate (290, 321) to protrude through the opening (323) formed in the rear plate (290, 321);
a middle bracket (440) disposed on the lower bracket (420) and configured to support the camera window (410);
an upper bracket (430) disposed on the middle bracket (440);
a first waterproofing member (450) disposed between the middle bracket (440) and the lower bracket (420) to provide a first waterproof seal between the middle bracket (440) and the lower bracket (420); and
a second waterproofing member (460) disposed between the middle bracket (440) and the camera window (410) to provide a second waterproof seal between the middle bracket (440) and the camera window (410).

2. The electronic device (101) of claim 1, wherein the upper bracket (430) is configured to provide a metallic decoration cover to cover a portion of the middle bracket (440), and
wherein the first waterproof seal between the middle bracket (440) and the lower bracket (420) and the second waterproof seal between the middle bracket (440) and the camera window (410) are maintained regardless of whether the upper bracket (430) is separated from the middle bracket (440) by an external impact.

3. The electronic device (101) of claim 1 or 2, wherein the camera window (410) and the upper bracket (430) are individually fixed to a first surface (441) of the middle bracket (440).

4. The electronic device (101) of any one of claims 1 to 3, wherein the middle bracket (440) includes a non-metal material having a specific gravity smaller than a specific gravity of the upper bracket (440).

5. The electronic device (101) of any one of claims 1 to 4, wherein when the intensity of an external impact applied to the electronic device (101) exceeds a first threshold and is less than a second threshold greater than the first threshold, the upper bracket (430) is configured to be separated from the middle bracket (440), and the middle bracket (440) is configured not to be separated from the lower bracket (420).

6. The electronic device (101) of any one of claims 1 to 5, wherein at least a portion, which is visible from an outside of the electronic device (101) through a gap (g2) between the camera window (410) and the upper bracket (430), of the first surface (441) of the middle bracket (440) has a surface roughness greater than a surface roughness of another portion of the first surface (441) of the middle bracket (440).

7. The electronic device (101) of claim 6, wherein the second waterproofing member (460) includes a waterproofing tape disposed on the other portion of the first surface (441) of the middle bracket (440).

8. The electronic device (101) of any one of claims 1 to 7, wherein an end of the upper bracket (430) contacts the lower bracket (420) to, together with the lower bracket (420), form at least a portion of a conductive path that allows static electricity to be transmitted to a ground of the electronic device (101).

9. The electronic device (101) of any one of claims 1 to 7, wherein an end of the upper bracket (430) is spaced apart from the lower bracket (420) by a gap (g1) having a size that allows the upper bracket (430) to, together with the lower bracket (420), form a conductive path that allows static electricity to be transferred to a ground of the electronic device (101).

10. The electronic device (101) of any one of claims 1 to 9, wherein the upper bracket (430) includes:
a first upper portion (431) disposed side by side with the camera window (410) and fixed to the first surface (441) of the middle bracket (440); and
a second upper portion (432) extending from the first upper portion (431) toward the lower bracket (420) and covering an outer lateral surface (445) connecting the first surface (441) and the second surface (442) of the middle bracket (440).

11. The electronic device (101) of any one of claims 1 to 10, further comprising an adhesive member (470) including an adhesive material and disposed between the upper portion (431) of the upper bracket (430) and the first surface (441) of the middle bracket (440).

12. The electronic device (101) of any one of claims 1 to 11, wherein the lower bracket (420) includes:
a first lower portion (421) supported by the inner surface of the rear plate (290, 321) opposite to an outer surface of the rear plate (290, 321);
a second lower portion (422) extending from the first lower portion (421), disposed to penetrate the opening (323) of the rear plate (290, 321), and protruding with respect to the outer surface of the rear plate (290, 321); and
a third lower portion (423) extending from the second lower portion (422) and supporting the second surface (442) of the middle bracket (440).

13. The electronic device (101) of any one of claims 1 to 12, further comprising an elastic member (480) including an elastic material and disposed between the first lower portion (421) and the inner surface of the rear plate (290, 321).

14. The electronic device (101) of claim 13, further comprising:
a camera support member (333) supporting the camera (331) and disposed in the housing (220, 320); and
another elastic member (490) including an elastic material and disposed between the first lower portion (421) and the camera support member (333).

15. The electronic device (101) of any one of claims 1 to 14, further comprising a circuit board (340) electrically connected to the camera (331), disposed in the housing (220, 320), and including a ground (341) electrically connected to the first lower portion (421).
